**Europäisches Patentamt**

**European Patent Office**

**Office européen des brevets**

(11) Veröffentlichungsnummer : **0 176 759**
**B1**

# (12) EUROPÄISCHE PATENTSCHRIFT

(45) Veröffentlichungstag der Patentschrift :
09.11.88

(51) Int. Cl.⁴ : **B 23 D 33/08**

(21) Anmeldenummer : **85110732.6**

(22) Anmeldetag : **27.08.85**

(54) Profil- und/oder Stab- und/oder Flachstahlschere.

(30) Priorität : **05.09.84 DE 3432672**

(43) Veröffentlichungstag der Anmeldung :
**09.04.86 Patentblatt 86/15**

(45) Bekanntmachung des Hinweises auf die Patenterteilung : **09.11.88 Patentblatt 88/45**

(84) Benannte Vertragsstaaten :
**AT BE CH DE FR GB IT LI LU NL SE**

(56) Entgegenhaltungen :
**AT-B- 339 116**
**DE-A- 1 752 917**
**DE-A- 2 838 735**
**DE-A- 3 007 099**
**DE-B- 1 652 768**
**DE-B- 2 533 153**
**GB-A- 620 809**

(73) Patentinhaber : **Firma Muhr und Bender**
**Kölner Strasse 99**
**D-5952 Attendorn (DE)**

(72) Erfinder : **Schröder, Werner**
**Auf dem Hahne 5**
**D-5950 Finnentrop 1 (DE)**

(74) Vertreter : **Gesthuysen, Hans Dieter, Dipl.-Ing. et al**
**Patentanwälte Gesthuysen + von Rohr Huyssenallee**
**15 Postfach 10 13 33**
**D-4300 Essen 1 (DE)**

## Beschreibung

Die Erfindung betrifft eine Profil- und/oder Stab- und/oder Flachstahlschere mit einem, vorzugsweise aus zwei Körperplatten bestehenden, Maschinenkörper, mit mindestens einem feststehenden Messer, mit mindestens einem Arbeitsschlitten, mit mindestens einem durch den Arbeitsschlitten beweglichen Messer und mit einem Niederhalter, der an dem Maschinenkörper durch einen Antrieb parallel zur Hauptebene des Maschinenkörpers bewegbar angeschlossen und von mindestens einem Klemmelement parallel zur Hauptebene des Maschinenkörpers fixiert ist.

Profil- und/oder Stab- und/oder Flachstahlscheren der hier in Rede stehenden Art sind seit Jahrzehnten in vielen Ausführungsformen bekannt (vgl. z. B. die DE-A-620,809, die DE-A-28 38 733, die DE-A-30 07 099 und die DE-B-25 33 153).

Häufig haben Profil- und/oder Stab- und/oder Flachstahlscheren zwei übereinander angeordnete Scherstellen, beispielsweise eine für Profilstahl und eine für Stabstahl, eine für Profilstahl und eine für Flachstahl oder eine für Stabstahl und eine für Flachstahl. Dabei ist für beide Scherstellen nur ein Arbeitsschlitten und nur ein Antrieb vorgesehen ; der Arbeitsschlitten führt beim Schneiden eine senkrechte Bewegung aus. Im übrigen ist es bekannt (vgl. die DE-A-28 38 733), bei Profilstahlscheren den Arbeitsschlitten unter einem Winkel von 45° zur Senkrechten zu führen. Schließlich ist es bekannt (vgl. z. B. die Maschine KBL 1300 im Prospekt « MUBEA-MATIC » der Anmelderin), zusätzlich weitere Funktionseinheiten vorzusehen, z. B. noch eine Stanze und/oder eine Ausklinkeinheit vorzusehen.

Bei allen bekannten Profil- und/oder Stab- und/oder Flachstahlscheren behindert der Niederhalter mehr oder weniger stark das Auswechseln der Messer. Abhängig von der Art des zu schneidenden Profilstahls werden aber unterschiedliche Messer benötigt, so daß das Auswechseln der Messer einfach möglich sein sollte, insbesondere nicht durch den Niederhalter behindert werden sollte.

Bei der Profil- und/oder Stab- und/oder Flachstahlschere, von der die Erfindung ausgeht (vgl. die GB-A-620,809), ist zwar der Niederhalter bewegbar am Maschinenkörper gehaltert, und zwar verschiebbar gehalten, jedoch nur zu dem Zweck, das Zuführen des zu bearbeitenden Werkstückes unter unterschiedlichen Winkeln zu ermöglichen.

Im übrigen ist es bei einer Tafelschere bekannt (vgl. die AT-B-339 116), einen Niederhalter hochklappbar, also um eine waagerechte Achse schwenkbar, an den Maschinenkörper anzuschließen.

Der Erfindung liegt nun die Aufgabe zugrunde, die bekannte Profil- und/oder Stab- und/oder Flachstahlschere, von der die Erfindung ausgeht, so auszugestalten und weiterzubilden, daß einerseits ein besonders einfaches Entfernen des Niederhalters aus dem Bereich der Scherstelle ermöglicht ist und andererseits der Niederhalter besonders einfach zugestellt werden kann.

Die erfindungsgemäße Profil- und/oder Stab- und/oder Flachstahlschere, bei der die zuvor dargelegte Aufgabe gelöst ist, ist dadurch gekennzeichnet, daß der Niederhalter mit einem Gelenk in zwei Ebenen schwenkbar an den Maschinenkörper angeschlossen ist, wobei die eine der beiden Ebenen die parallel zur Hauptebene des Maschinenkörpers liegende Ebene ist. Eine Möglichkeit der Realisierung der Schwenkbarkeit des Niederhalters in zwei Ebenen ist dadurch gekennzeichnet, daß das Gelenk einen vorzugsweise vertikal angeordneten ersten Gelenkbolzen aufweist und der erste Gelenkbolzen um einen senkrecht auf der Hauptebene des Maschinenkörpers stehenden zweiten Gelenkbolzen schwenkbar ist. Die Schwenkbarkeit des Niederhalters in zwei Ebenen kann aber auch dadurch realisiert sein, daß das Gelenk einen senkrecht auf der Hauptebene des Maschinenkörpers stehenden ersten Gelenkbolzen aufweist und der erste Gelenkbolzen um einen vorzugsweise vertikal angeordneten zweiten Gelenkbolzen schwenkbar ist.

Im einzelnen gibt es verschiedene Möglichkeiten, die erfindungsgemäße Profil- und/oder Stab- und/oder Flachstahlschere auszugestalten und weiterzubilden. Das wird im folgenden in Verbindung mit einer Zeichnung näher erläutert. Es zeigt

Fig. 1 stark schematisiert, eine Ansicht einer bevorzugten Ausführungsform einer erfindungsgemäßen Profil- oder Flachstahlschere,

Fig. 2 in gegenüber der Fig. 1 vergrößertem Maßstab, eine Ansicht des Niederhalters der Profil- und Flachstahlschere nach Fig. 1,

Fig. 3 in gegenüber der Fig. 2 vergrößertem Maßstab, einen Schnitt durch den Gegenstand nach Fig. 2 längs der Linie III-III und

Fig. 4 eine Ansicht in Richtung des Pfeiles X auf den Gegenstand nach Fig. 2.

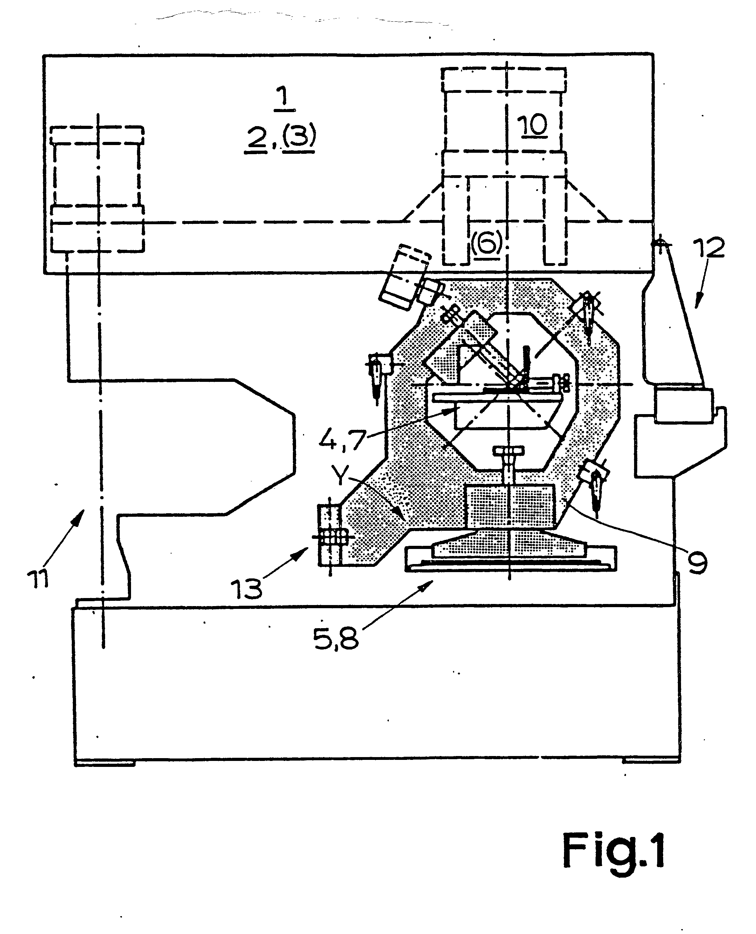

Die Fig. 1 zeigt — als eine mögliche Ausführungsform einer Profil- und/oder Stab- und/oder Flachstahlschere — eine Profil- und Flachstahlschere mit einem Maschinenkörper 1, der aus zwei Körperplatten 2, 3 besteht, mit zwei übereinander angeordneten feststehenden Messern 4, 5, mit einem Arbeitsschlitten 6, mit zwei übereinander angeordneten und durch den Arbeitsschlitten 6 beweglichen Messern 7, 8 und mit einem Niederhalter 9.

Funktional besteht die in Fig. 1 dargestellte Profil- und Flachstahlschere aus einer Profilstahlschere einerseits und einer Flachstahlschere andererseits. Zu der Profilstahlschere gehören das feststehende Messer 4 und das bewegliche Messer 7, zu der Flachstahlschere das feststehende Messer 5 und das bewegliche Messer 8. Für beide Scherstellen — Profilstahlschere einerseits, Flachstahlschere andererseits — ist nur ein einziger Arbeitsschlitten 6 und ein einziger, dem Arbeitsschlitten 6 zugeordneter Antrieb 10 vorgesehen. Das bewegliche Messer 7 der Profilstahlschere erfährt mit Hilfe eines im einzelnen nicht dargestellten Messerschlittens eine Scherbewegung, die unter einem Winkel von 45° zur Senkrechten verläuft.

Wie die Fig. 1 zeigt, sind bei der dargestellten Profil- und Flachstahlschere zusätzliche Funktionseinheiten vorgesehen, nämlich einerseits eine nur angedeutete Stanze 11 und eine Ausklinkeinheit 12.

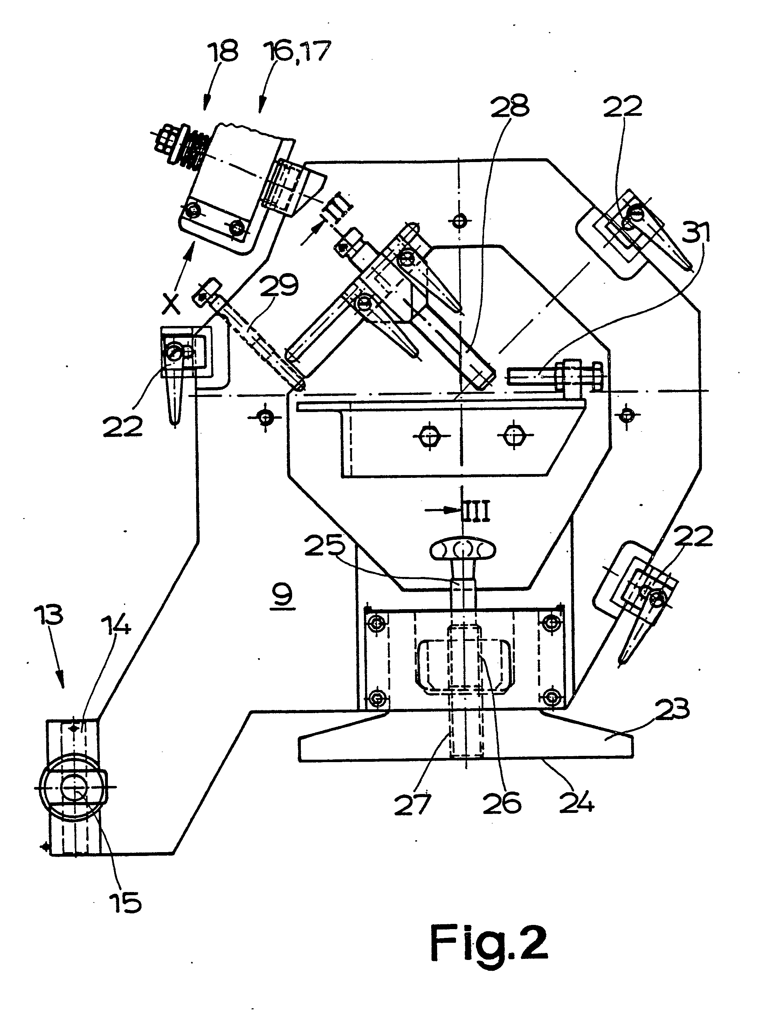

Den Fig. 1 und 2 ist zu entnehmen, daß bei der dargestellten Profil- und Flachstahlschere der Niederhalter 9 bewegbar an den Maschinenkörper 1 angeschlossen ist. Im einzelnen und erfindungsgemäß ist der Niederhalter 9 mit einem Gelenk 13 in zwei Ebenen schwenkbar an den Maschinenkörper 1 angeschlossen, wobei die eine der beiden Ebenen die parallel zur Hauptebene des Maschinenkörpers 1 liegende Ebene ist. Im einzelnen weist das Gelenk 13 einen vertikal angeordneten ersten Gelenkbolzen 14 auf und ist der erste Gelenkbolzen 14 um einen senkrecht auf der Hauptebene des Maschinenkörpers 1 stehenden zweiten Gelenkbolzen 15 schwenkbar ; das Gelenk 13 besteht also aus den beiden Gelenkbolzen 14, 15.

Im übrigen zeigen die Fig. 1 und 2 insoweit eine bevorzugte Ausführungsform der erfindungsgemäßen Profil- und Flachstahlschere, als zwischen dem Maschinenkörper 1 und dem Niederhalter 9 eine hydraulisch beaufschlagbare Zylinder-Kolben-Anordnung 16 vorgesehen ist. Mit Hilfe der Zylinder-Kolben-Anordnung 16 kann also der Niederhalter 9 betätigt werden, nämlich — entsprechend dem Pfeil Y in Fig. 1 — in einer parallel zur Hauptebene des Maschinenkörpers 1 liegenden Schwenkebene geschwenkt werden, und zwar um den zweiten Gelenkbolzen 15 des Gelenks 13.

Wie die Fig. 1, 2 und 4 zeigen, ist der Kolben 17 der Zylinder-Kolben-Anordnung 16 durch Federn 18 beaufschlagt ; als den Kolben 17 der Zylinder-Kolben-Anordnung 16 beaufschlagende Federn 18 sind Tellerfedern vorgesehen.

Die zuvor beschriebene Ausführungsform der erfindungsgemäßen Profil- und Flachstahlschere ist also in bezug auf den Niederhalter 9 dadurch gekennzeichnet, daß der Niederhalter 9 hydraulisch — durch die Zylinder-Kolben-Anordnung 16 — betätigbar und durch die Federn 18 selbsttätig lösbar ist. Durch im einzelnen nicht dargestellte und hier auch nicht zu beschreibende Maßnahmen ist ein automatischer Ablauf der Funktionen « Niederhalter anstellen » und « Schneiden » sichergestellt. Wird die erfindungsgemäße Profil- und Flachstahlschere eingeschaltet, dann wird zunächst der Niederhalter 9 — mit Hilfe der Zylinder-Kolben-Anordnung 16 — angestellt, erst danach erfolgt dann das Schneiden, d. h., erst dann, wenn der Niederhalter 9 angestellt ist, erfolgt die Scherbewegung, wird also der Antrieb 10 hydraulisch beaufschlagt.

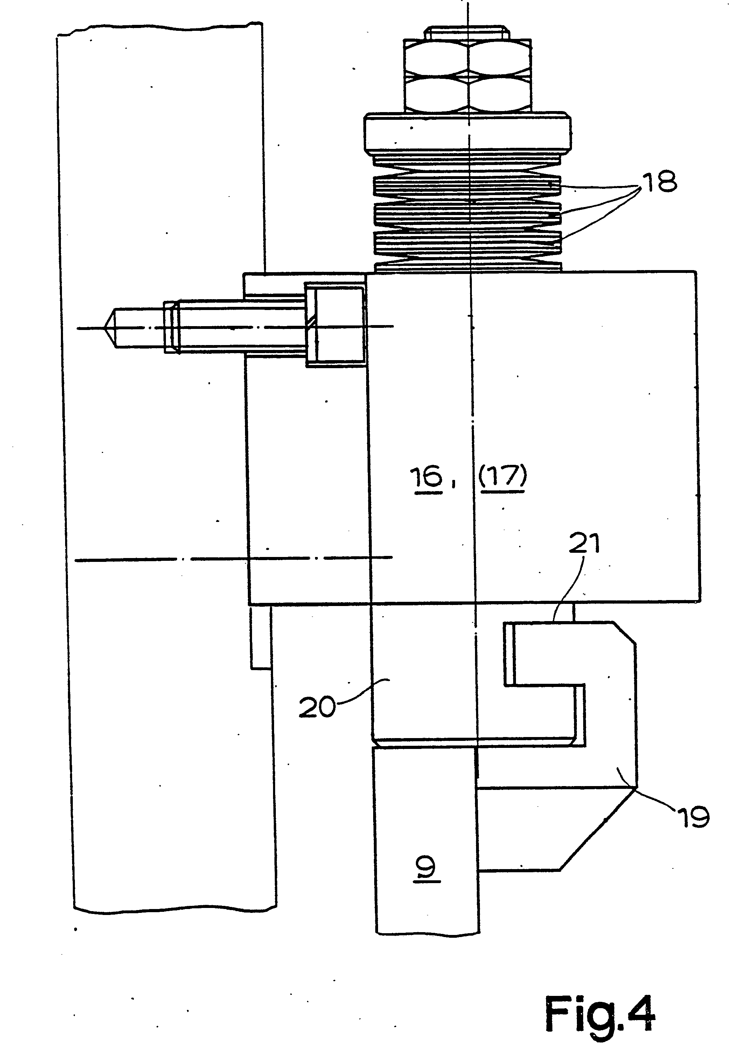

Zwischen dem Niederhalter 9 und dem Kolben 17 der Zylinder-Kolben-Anordnung 16 muß eine Verbindung verwirklicht sein, die einerseits ein Anstellen des Niederhalters 9, andererseits ein Rückholen des Niederhalters 9 sicherstellt, aber auch ein Wegschwenken des Niederhalters 9 vom Maschinenkörper 1 zuläßt, also ein Schwenken des Niederhalters 9 um den ersten Gelenkbolzen 14 des Gelenks 13 zuläßt. Eine insoweit bevorzugte Ausführungsform, die insbesondere aus Fig. 4 erkennbar ist, ist dadurch gekennzeichnet, daß der Niederhalter 9 mit einem dem Kolben 17 der Zylinder-Kolben-Anordnung 16 zugeordneten Verbindungsbügel 19 versehen ist, der Kolben 17 der Zylinder-Kolben-Anordnung 16 an seinem dem Niederhalter 9 zugewandten Ende 20 eine Ausnehmung 21 aufweist und der Verbindungsbügel 19 des Niederhalters 9 in die Ausnehmung 21 des Kolbens 17 der Zylinder-Kolben-Anordnung 16 eingreift.

Wie zuvor erläutert, gilt für die erfindungsgemäße Profil- und Flachstahlschere, daß der Niederhalter 9 vom Maschinenkörper 1 weg schwenkbar ist, — so daß der Niederhalter 9 nicht das Auswechseln der Messer 4, 7 behindert. Im normalen Betrieb muß natürlich der Niederhalter 9 so fixiert sein, daß er nur — mit Hilfe der Zylinder-Kolben-Anordnung 16 — die Anstellbewegung ausführen kann, also eine Schwenkbewegung um den zweiten Gelenkbolzen 15 des Gelenks 13. Das ist bei der in den Fig. 1 und 2 dargestellten Ausführungsform der erfindungsgemäßen Profil- und Flachstahlschere dadurch realisiert, daß am Maschinenkörper 1 drei Klemmelemente 22 vorgesehen sind und der Niederhalter 9 mit Hilfe der Klemmelemente 22 am Maschinenkörper 1 fixierbar ist.

Wie die Fig. 1 und 2 zeigen, ist der Niederhalter 9 im übrigen mit einem Niederhalterbalken 23 versehen ; der Niederhalterbalken 23 weist eine in der Ruhestellung des Niederhalters 9 schräge Niederhalterfläche 24 auf und ist mit einer Einstellspindel 25 höhenverstellbar an den Niederhalter 9 angeschlossen. Dabei ist die Einstellspindel 25 einerseits — im Bereich des am Niederhalter 9 verwirklichten Führungsgewindes 26 — mit einem Linksgewinde, andererseits — im Bereich des im Niederhalterbalken 23 verwirklichten Führungsgewindes 27 — mit einem Rechtsgewinde versehen. Daraus resultiert ein gegenüber einer normalen Ausführung der Einstellspindel doppelter umdrehungsspezifischer Verstellweg. Des weiteren ist der Niederhalter 9 mit Niederhalterspindeln 28, 29 versehen. Die Niederhalterspindel 28 ist unter einem sich nach oben öffnenden spitzen Winkel zur Senkrechten geführt. Damit ist erreicht, daß das dem niederzuhaltenden Profilstahl zugeordnete Ende 30 der Niederhalterspindel 28 relativ nahe in die Schneidebene herankommt.

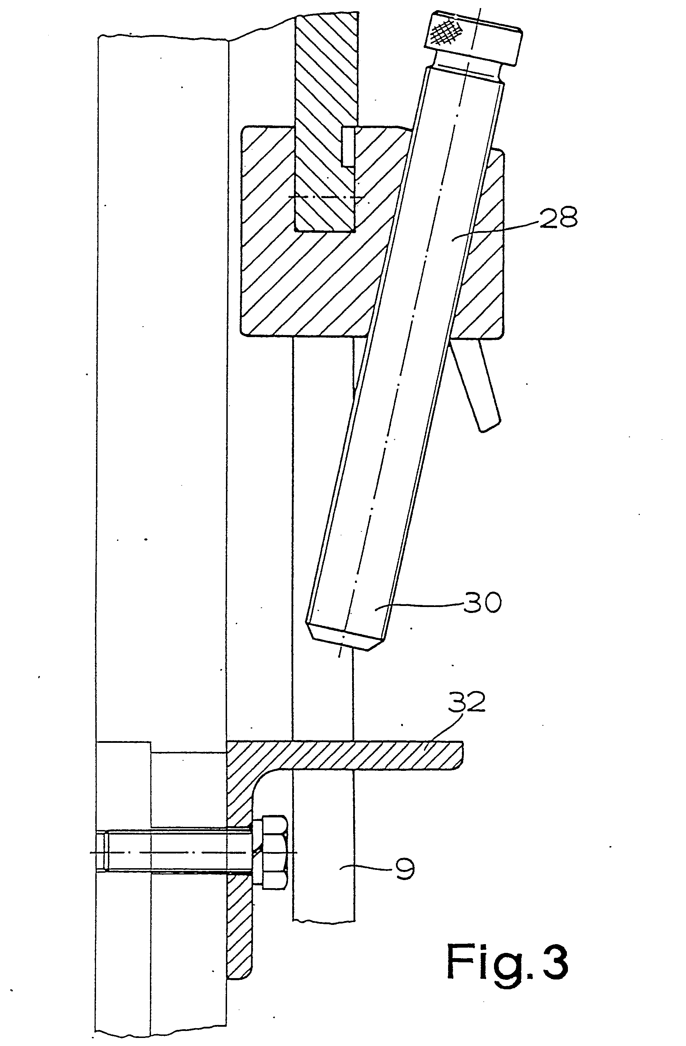

Schließlich zeigen die Fig. 2 und 3 noch, daß der Niederhalter 9 einerseits mit einer waagerecht geführten Widerlagerspindel 31 und andererseits mit einem waagerecht angeordneten Auflager 32 versehen ist.

## Patentansprüche

1. Profil- und/oder Stab- und/oder Flachstahlschere mit einem, vorzugsweise aus zwei Körperplatten (2, 3) bestehenden, Maschinenkörper (1), mit mindestens einem feststehenden Messer (4, 5), mit mindestens einem Arbeitsschlitten (6), mit mindestens einem durch den Arbeitsschlitten (6) beweglichen Messer (7, 8) und mit einem Niederhalter (9), der an dem Maschinenkörper (1) durch einen Antrieb parallel zur Hauptebene des Maschinenkörpers (1) bewegbar angeschlossen und von mindestens einem Klemmelement parallel zur Hauptebene des Maschinenkörpers (1) fixiert ist, dadurch gekennzeichnet, daß der Niederhalter (9) mit einem Gelenk (13) in zwei Ebenen schwenkbar an den Maschinenkörper (1) angeschlossen ist, wobei die eine der beiden Ebenen die parallel zur Hauptebene des Maschinenkörpers (1) liegende Ebene ist.

2. Profil- und/oder Stab- und/oder Flachstahlschere nach Anspruch 1, dadurch gekennzeichnet, daß das Gelenk (13) einen vorzugsweise vertikal angeordneten ersten Gelenkbolzen (14) aufweist und der erste Gelenkbolzen (14) um einen senkrecht auf der Hauptebene des Maschinenkörpers (1) stehenden zweiten Gelenkbolzen (15) schwenkbar ist.

3. Profil- und/oder Stab- und/oder Flachstahlschere nach Anspruch 1, dadurch gekennzeichnet, daß das Gelenk (13) einen senkrecht auf der Hauptebene des Maschinenkörpers stehenden ersten Gelenkbolzen aufweist und der erste Gelenkbolzen um einen vorzugsweise vertikal angeordneten zweiten Gelenkbolzen schwenkbar ist.

4. Profil- und/oder Stab- und/oder Flachstahlschere nach einem der Ansprüche 1 bis 3, dadurch gekennzeichnet, daß als Schwenkantrieb eine hydraulisch beaufschlagbare Zylinder-Kolben-Anordnung (16) vorgesehen ist und der Kolben (17) der Zylinder-Kolben-Anordnung (16) durch mindestens eine Feder (18) beaufschlagt ist.

5. Profil- und/oder Stab- und/oder Flachstahlschere nach Anspruch 4, dadurch gekennzeichnet, daß der Niederhalter (9) mit einem dem Kolben (17) der Zylinder-Kolben-Anordnung (16) zugeordneten Verbindungsbügel (19) versehen ist, der Kolben (17) der Zylinder-Kolben-Anordnung (16) an seinem dem Niederhalter (9) zugewandten Ende (20) eine Ausnehmung (21) aufweist und der Verbindungsbügel (19) des Niederhalters (9) in die Ausnehmung (21) des Kolbens (17) der Zylinder-Kolben-Anordnung (16) eingreift.

6. Profil- und/oder Stab- und/oder Flachstahlschere nach einem der Ansprüche 1 bis 5, dadurch gekennzeichnet, daß der Niederhalter (9) mit einem Niederhalterbalken (23) versehen ist und der Niederhalterbalken (23) eine in der Ruhestellung des Niederhalters (9) schräge Niederhalterfläche (24) aufweist und mit einer Einstellspindel (25) höhenverstellbar an den Niederhalter (9) angeschlossen ist.

7. Profil- und/oder Stab- und/oder Flachstahlschere nach Anspruch 6, dadurch gekennzeichnet, daß die Einstellspindel (25) einerseits — im Bereich des am Niederhalter (9) verwirklichten Führungsgewindes (26) — mit einem Linksgewinde, andererseits — im Bereich des im Niederhalterbalken (23) verwirklichten Führungsgewindes (27) — mit einem Rechtsgewinde versehen ist — oder umgekehrt.

8. Profil- und/oder Stab- und/oder Flachstahlschere nach einem der Ansprüche 1 bis 7, dadurch gekennzeichnet, daß der Niederhalter (9) mit mindestens einer Niederhalterspindel versehen ist, vorzugsweise mit mehreren Niederhalterspindeln (28, 29) versehen ist.

9. Profil- und/oder Stab- und/oder Flachstahlschere nach Anspruch 8, dadurch gekennzeichnet, daß die Niederhalterspindel (28) bzw. die Niederhalterspindeln (28) unter einem sich nach oben öffnenden spitzen Winkel zur Senkrechten geführt ist bzw. sind.

10. Profil- und/oder Stab- und/oder Flachstahlschere nach einem der Ansprüche 1 bis 9, dadurch gekennzeichnet, daß der Niederhalter (9) mit mindestens einer — vorzugsweise waagerecht geführten — Widerlagerspindel (31) versehen ist.

11. Profil- und/oder Stab- und/oder Flachstahlschere nach einem der Ansprüche 1 bis 10, dadurch gekennzeichnet, daß der Niederhalter (9) mit einem waagerecht angeordneten Auflager (32) versehen ist.

## Claims

1. A profile and/or bar and/or flat steel shearing machine with a machine frame (1) that preferably consists of two frame plates (2, 3), with at least one stationary blade (4, 5), at least one operating slider (6), at least one movable blade (7, 8) moved by the operating slide (6), and with a holding-down device (9) that is movably attached to the machine frame (1) by a drive parallel to the main plane of machine frame (1) and is fixed parallel to the main plane of machine frame (1) by at least one clamping unit, characterized in that the holding-down device (9) is attached to the machine frame (1) by a hinged joint (13) enabling it to swivel in two planes, one of the two planes being the plane that lies parallel to the main plane of machine frame (1).

2. A profile and/or bar and/or flat steel shearing machine according to Claim 1, characterized in that the hinged joint (13) has a preferably vertically-arranged first joint pin (14) and the first joint pin (14) is swivellable around a second joint pin (15) standing perpendicularly to the main plane of machine frame (1).

3. A profile and/or bar and/or flat steel shearing machine according to Claim 1, characterized in that the hinged joint (13) has a first joint pin standing perpendicularly to the main plane of the machine frame and the first joint pin is swivellable around a, preferably vertically-arranged, second joint pin.

4. A profile and/or bar and/or flat steel shearing machine according to one of Claims 1 to 3, characterized in that a hydraulically-operable piston-cylinder device (16) is provided as swivelling drive, and the piston (17) of the piston-cylinder device (16) is loaded by at least one spring (18).

5. A profile and/or bar and/or flat steel shearing machine according to Claim 4, characterized in that holding-down device (9) is provided with a connecting bracket (19) subordinate to piston (17) of piston-cylinder device (16), that piston (17) of piston-cylinder device (16) possesses a recess (21) at its end (20) that faces towards the holding-down device (9), and that the connecting bracket (19) of holding-down device (9) engages into recess (21) of piston (17) of the piston-cylinder device (16).

6. A profile and/or bar and/or flat steel shearing machine according to one of Claims 1 to 5, characterized in that the holding-down device (9) is provided with a holding-down beam (23) and the holding-down beam (23) possesses a holding-down surface (24) that is oblique in the non-operating position of the holding-down device (9) and is attached to the holding-down device (9), its height being adjustable by means of an adjustment screw (25).

7. A profile and/or bar and/or flat steel shearing machine according to Claim 6, characterized in that the adjustment screw (25) on one hand is provided with a left-hand thread in the area of displacement thread (26) that acts on the holding-down device (9), and on the other hand is provided with a right-hand thread in the area of displacement thread (27) that acts on the holding-down beam (23) — or vice versa.

8. A profile and/or bar and/or flat steel shearing machine according to one of Claims 1 to 7, characterized in that the holding-down device (9) is provided with at least one holding-down screw, preferably with more than one holding-down screw (28, 29).

9. A profile and/or bar and/or flat steel shearing machine according to Claim 8, characterized in that the holding-down screw (28) or holding-down screws (28) is or are aligned at an acute angle to the perpendicular, opening out upwards.

10. A profile and/or bar and/or flat steel shearing machine according to one of Claims 1 to 9, characterized in that the holding-down device (9) is provided with at least one abutment screw (31), preferably horizontally aligned.

11. A profile and/or bar and/or flat steel shearing machine according to one of Claims 1 to 10, characterized in that the holding-down device (9) is provided with a horizontally aligned support (32).

**Revendications**

1. Cisaille pour profilés et/ou barres et/ou aciers plats comportant un corps de machine (1) constitué, de préférence, de deux plaques (2, 3), au moins une lame fixe (4, 5), au moins un chariot de travail (6), au moins une lame (7, 8) pouvant être déplacée par le chariot de travail (6), ainsi qu'un serre-flan (9) qui est raccordé au corps (1) de la machine de façon à pouvoir être déplacé par une commande parallèlement au plan principal de ce corps (1) et qui est fixé par au moins un élément de serrage parallèlement au plan principal du corps (1) de la machine, caractérisée en ce que le serre-flan (9) est raccordé au corps (1) de la machine de façon à pouvoir pivoter dans deux plans au moyen d'une articulation (13), un des deux plans étant le plan parallèle au plan principal du corps (1) de la machine.

2. Cisaille pour profilés et/ou barres et/ou aciers plats selon la revendication 1, caractérisée en ce que l'articulation (13) comporte un premier axe (14) disposé, de préférence, verticalement, ce premier axe d'articulation (14) pouvant pivoter autour d'un deuxième axe d'articulation (15) disposé perpendiculairement au plan principal du corps (1) de la machine.

3. Cisaille pour profilés et/ou barres et/ou aciers plats selon la revendication 1, caractérisée en ce que l'articulation (13) comporte un premier axe disposé perpendiculairement au plan principal du corps de la machine, ce premier axe d'articulation pouvant pivoter autour d'un deuxième axe d'articulation disposé, de préférence, verticalement.

4. Cisaille · pour profilés et/ou barres et/ou aciers plats selon une des revendications 1 à 3, caractérisée en ce que, comme commande de pivotement, on prévoit un système à cylindre/piston (16) pouvant être sollicité hydrauliquement, tandis que le piston (17) de ce système (16) est sollicité par au moins un ressort (18).

5. Cisaille pour profilés et/ou barres et/ou aciers plats selon la revendication 4, caractérisée en ce que le serre-flan (9) est pourvu d'un étrier de raccordement (19) attribué au piston (17) du système à cylindre/piston (16), le piston (17) de ce système (16) comporte un évidement (21) à son extrémité (20) tournée vers le serre-flan (9), tandis que l'étrier de raccordement (19) du serre-flan (9) vient s'engager dans l'évidement (21) du piston (17) du système (16).

6. Cisaille pour profilés et/ou barres et/ou aciers plats selon une des revendications 1 à 5, caractérisée en ce que le serre-flan (9) est pourvu d'une barre (23), laquelle comporte une surface (24) inclinée dans la position de repos du serre-flan (9) auquel elle est raccordée avec possibilité de réglage en hauteur au moyen d'une broche de réglage (25).

7. Cisaille pour profilés et/ou barres et/ou aciers plats selon la revendication 6, caractérisée en ce que la broche de réglage (25), d'une part (dans la zone du filet de guidage (26) formé sur le serre-flan (9)), est pourvue d'un filet à gauche tandis que, d'autre part, (dans la zone du filet de guidage (27) réalisé dans la barre (23) du serre-flan)), elle est pourvue d'un filet à droite, ou inversement.

8. Cisaille pour profilés et/ou barres et/ou aciers plats selon une des revendications 1 à 7, caractérisée en ce que le serre-flan (9) comporte au moins une broche, de préférence, plusieurs broches (28, 29).

9. Cisaille pour profilés et/ou barres et/ou aciers plats selon la revendication 8, caractérisée en ce que la ou les broches (28) du serre-flan est ou sont guidées sous un angle aigu ouvert vers le haut par rapport à la verticale.

10. Cisaille pour profilés et/ou barres et/ou aciers plats selon une des revendications 1 à 9, caractérisée en ce que le serre-flan (9) comporte au moins une broche de butée (31) (de préférence, guidée horizontalement).

11. Cisaille pour profilés et/ou barres et/ou aciers plats selon une des revendications 1 à 10, caractérisée en ce que le serre-flan (9) comporte un support (32) disposé horizontalement.

**Fig.1**

0 176 759

Fig.2

Fig.3

18

16 , (17)

21

20

19

9

**Fig.4**